# EUROPEAN PATENT APPLICATION

(11) **EP 4 768 342 A1**
(43) Date of publication of application: **01.07.2026**
(21) Application number: 25222073.6
(22) Date of filing: 10.12.2025
(51) Int. Cl.: B60R 13/01

(54) **DOUBLE FLOOR FOR A VEHICLE TRUNK, VEHICLE TRUNK COMPRISING IT, AND MANUFACTURING METHOD FOR THE DOUBLE FLOOR**

(30) Priority: 11.12.2024 ES 202431041
(71) Applicant: Seat, S.A., 08760 Martorell - Barcelona (ES)
(72) Inventor: COLET GALÍ, Joan, 08760 Martorell (ES); HERRERA GENÉ, Joaquín, 08760 Martorell (ES)
(74) Representative: Elzaburu S.L.P.

(57) **Abstract**

Double floor (1) for a vehicle trunk comprising:
- a rigid structure (2) defining a main surface delimited by a rear end (3) according to a longitudinal direction, facing a rear tailgate (12) of the trunk, a front end (4) opposite the rear end (3), and two side ends substantially perpendicular to the front end (4) and the rear end (3); and
- a flexible covering (5) over at least the main surface of the rigid structure (2),
wherein the flexible covering (5) comprises an excess part, such that said excess part of the flexible covering (5) defines a flexible spoiler (6) that projects beyond the front end (4) of the rigid structure (2) along the longitudinal direction. Said flexible spoiler (6) is created by folding the excess part of the flexible covering (5) onto itself, forming at least two flaps (7, 7'). The excess part is separated from the main surface of the rigid structure (2), allowing relative movement of the at least two flaps (7, 7') of said excess part relative to the main surface of the rigid structure (2).

## Description

### FIELD OF THE INVENTION

The present invention falls within the field of the automotive industry. Specifically, it refers to a double floor for a vehicle trunk, and a vehicle trunk comprising it, as well as a manufacturing method for said double floor.

### BACKGROUND OF THE INVENTION

Vehicle trunks with a double floor are known. Said double floor can be moved inside the trunk and placed by the user in different positions. Thus, the user can obtain a better configuration and customization of the trunk space. Depending on certain positions of the double floor inside the trunk, a lower gap may be created beneath the same. Said gap may accommodate tools, a tire-repair kit, warning devices such as triangles or lights, a jack, a spare wheel, a first-aid kit, or other items.

The double floor comprises:
- a rear end along a longitudinal direction of the vehicle, facing the tailgate or movable trunk closure;
- a front end opposite the rear end, facing the rear seat backrests, substantially parallel to the rear end; and
- two side ends, parallel to each other and substantially perpendicular to the front and rear ends.

The double floor may be moved between a first horizontal position and a second horizontal position, raised relative to the first horizontal position. At said first horizontal position, the double floor can form the trunk floor, being substantially horizontal and adjacent to said trunk floor. Alternatively, the double floor may be arranged in a second position, substantially horizontal, but raised relative to said trunk floor. It is common for the double floor to be movable between both horizontal positions as per the user's needs. It is in said second position that the aforementioned lower gap intended for storing objects is created. The double floor usually comprises a carpet covering the rigid part (or hard core) of the same, covering at least the main surface or upper surface of the double floor, providing greater resistance to wear due to rubbing against objects placed on the double floor, as well as a good surface finish.

A problem encountered with double floors is the existence of a possible gap between the double floor and the vehicle rear seats. Such a gap arises because the trunk space, particularly in the longitudinal direction, differs between the first horizontal position and the second horizontal position. In addition, this space also varies depending on the folding position of the rear seat. This may cause small objects placed in the trunk to fall down through that gap.

To cover the gap between the double load floor and the backrest of the rear seats, an extension known as a "flap" or spoiler is used, which may be inclined relative to the remainder of the double floor. This extension has a hard core and is covered with carpet.

However, this solution does not ensure contact between the rear seat and the end of the flap in all possible positions of the rear seat and/or the double floor inside the trunk. Particularly, when the gap created between the double floor and the rear seats is small along the longitudinal direction. Indeed, it may occur that when the double floor is in the first horizontal position it contacts the rear seat, but, when in the second horizontal position, it does not, creating a gap. The same may occur in a single position of the double floor; for example, in the second horizontal position, when the rear seat is reclined, there may be no contact between them, but when the rear seat is folded, there is.

Therefore, it is necessary to ensure contact between the rear seat and the end of the double floor in all possible positions of the rear seat and of the double floor to avoid the existence of any possible gap between them.

### SUMMARY OF THE INVENTION

The subject matter of this invention is to provide a double floor for a vehicle trunk that overcomes the disadvantages of the prior art.

According to a first aspect, the invention provides a double floor for a vehicle trunk comprising:
- a rigid structure defining a main surface delimited by a rear end according to a longitudinal direction, facing a rear tailgate of the trunk, a front end opposite the rear end, and two side ends substantially perpendicular to the front end and the rear end; and
- a flexible covering over at least the main surface of the rigid structure.

It is noted that the double floor is a component that can be moved inside the trunk and even removed from the same. Thus, the rear, front and side ends are defined according to an use position or horizontal position of the double floor inside the trunk.

Unlike the double floors known in the prior art, the flexible covering of the double floor in this invention comprises an excess part, such that said excess part of the flexible covering defines a flexible spoiler projecting itself relative to the front end of the rigid structure along the longitudinal direction, said flexible spoiler generated by folding the excess part of the flexible covering over itself, forming at least two flaps, said excess part being separated from the main surface of the rigid structure, allowing relative movement of the at least two flaps of said excess part relative to the main surface of the rigid structure.

According to a second aspect, the invention also provides a vehicle trunk comprising the double floor according to the invention.

According to a third aspect, the invention also provides a manufacturing method of a trunk double floor of the invention, comprising the steps of:
- obtaining a rigid structure defining a main surface delimited by a rear end along a longitudinal direction facing a rear tailgate of the trunk, a front end, opposite the rear end, and two side ends substantially perpendicular to the front end and the rear end; and
- obtaining a flexible covering configured to cover at least the main surface of the rigid structure and to include an excess part relative to said main surface of the rigid structure;
- placing a flexible covering over at least the main surface of the rigid structure, arranging the excess part near the front end of the rigid structure;
- folding the excess part of the flexible covering upon itself, such that said excess part defines a flexible spoiler projecting itself relative to said front end of the rigid structure along the longitudinal direction, said excess part creating two flaps; and
- securing the ends of the flaps opposite the folding to the rigid structure, placing said excess part separated from the main surface of the rigid structure to allow relative movement of the, at least, two flaps of said excess part relative to the main surface of the rigid structure.

By means of this configuration, it is possible to cover the gap between the double floor in the trunk and the backrest of the rear seat in all the horizontal positions the double floor may occupy inside the trunk, as well as in all the folding positions of the backrests of the rear seats.

Further, when the trunk double floor is in an upper horizontal position, prevents the rigid structure of the double floor from being hit by the backrest of the rear seats.

Similarly, when the trunk double floor is in a lower horizontal position, for example, adjacent to the trunk floor, it is possible to cover the lower area minimizing the space occupied by the flexible spoiler, so that the cargo space in the trunk is maximized.

Further advantageous embodiments of the invention are set forth in the dependent claims.

### BRIEF DESCRIPTION OF THE DRAWINGS

The subject matter of this invention will be illustrated below in a nonlimiting way concerning the accompanying drawings, in which:
Figure 1A shows a detailed view of the front area of a double floor for the vehicle trunk of the prior art.
Figure 1B shows a double floor for the vehicle trunk of the prior art, placed at several horizontal positions inside the trunk.
Figure 2 shows an embodiment of a double floor for a trunk according to the invention.
Figure 3 shows another embodiment of a double floor for a trunk according to the invention.
Figure 4 shows another embodiment of a double floor for a trunk according to the invention, with a downward-oriented flexible spoiler.
Figure 5 shows another embodiment of a double floor for a trunk according to the invention.
Figure 6 shows another embodiment of a double floor for a trunk according to the invention.
Figure 7 shows a flexible spoiler of the double floor of the invention formed by a flexible covering folded onto itself with two flaps joined to each other.

### DETAILED DESCRIPTION OF THE INVENTION

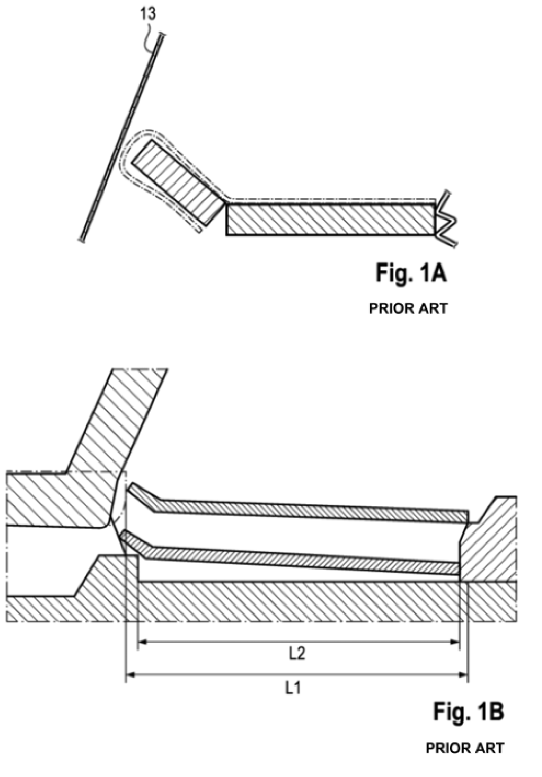

Figure 1A shows a double floor for the vehicle trunk of the prior art, having a rigid part covered with carpet on its upper surface and an extension called a "flap" or spoiler which pivots relative to the rigid part and may be inclined relative to said rigid part of the double floor. This extension has a hard core and is covered with carpet. It may be noted that the carpet extends to the lower area of the flap or spoiler. The carpet is joined to the lower area of the flap, so that the carpet edge is not exposed on a visible surface, preventing it from coming loose during handling. The pivoting movement of the flap relative to the rigid part allows the longitudinal dimension of the double floor to be adjusted, preventing the formation of a gap between the rear surface of the rear seats and the double floor. As mentioned above, in trunk configurations where the gap that may be created between the rear surface of the backrests (13) of the rear seats and the double floor is small in terms of longitudinal dimension, the rigid flap has drawbacks, both in construction and in user handling.
Figure 1B shows a double floor for the vehicle trunk of the prior art, placed at several positions inside the trunk. More specifically, it shows its lower horizontal position (close to the trunk floor) and an upper horizontal position at a certain distance from the trunk floor. Figure 1B defines different longitudinal dimensions to be covered by the double floor:
- a first area of the trunk, with a longitudinal dimension L1 according to the vehicle forward direction; and
- a second area of the trunk, with a longitudinal dimension L2 according to said vehicle forward direction, where L1 is greater than L2.

The existing issue may be seen: if the double floor is made of only one rigid component with a length substantially equal to L2, a gap would be created in the front area of said double floor when placed in the first position of the trunk.

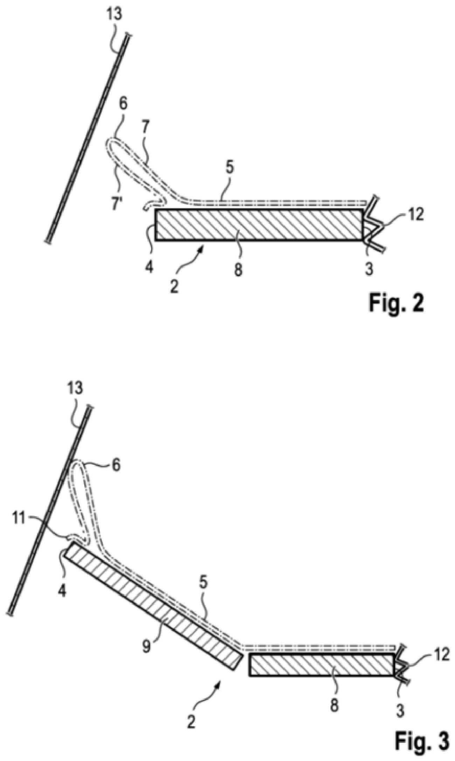

Figure 2 shows a trunk and double floor configuration, where the double floor (1) for the trunk of the invention comprises:
- a rigid structure (2) defining a main surface delimited by a rear end (3) according to a longitudinal direction, facing a rear tailgate (12) of the trunk, a front end (4) opposite the rear end (3), and two side ends substantially perpendicular to the front end (4) and the rear end (3); and
- a flexible covering (5) over at least the main surface of the rigid structure (2).

Figures 2 to 7 show detailed views of different embodiments of the double floor (1) according to this invention. In all of them, the flexible covering (5) comprises an excess part, such that said excess part of the flexible covering (5) defines a flexible spoiler (6) protruding from the front end (4) of the rigid structure (2) along the longitudinal direction. Said flexible spoiler (6) is formed by folding the excess part of the flexible covering (5) onto itself, forming at least two flaps (7, 7'). Said excess part is separated from the main surface of the rigid structure (2) to allow relative movement of the at least two flaps (7, 7') of said excess part relative to the main surface of the rigid structure (2).

The flexible covering (5) also comprises a non-excess part that covers and is in contact with the main surface of the rigid structure (2).

Therefore, the purpose is to create a flexible spoiler (6) in the front area of the double floor (1) that allows contact with the rear surface of the backrest (13) of the rear seat. This flexible spoiler (6) does not require additional components, only an excess part of the same flexible covering (5) used to cover the rigid structure (2). This is a particularly advantageous solution when the gap between the backrest (13) and the double floor (1) is small, according to the longitudinal direction. The flexible spoiler (6) may easily adapt its geometry to ensure contact between the backrest (13) and the double floor (1), regardless of the backrest (13) position and the different horizontal positions in which the double floor (1) may be arranged inside the trunk.

Figures 2 to 7 also show that the folding axis of the excess part of the flexible covering (5) may be arranged substantially parallel to the front end (4) of the rigid structure (2).

In addition, Figures 2 to 7 show that the folding axis of the excess part of the flexible covering (5) may be arranged spaced apart from the rigid structure (2), with the opposite ends of the at least two flaps (7, 7') fixed to the rigid structure (2), such that said at least two flaps (7, 7') may be pivoted relative to said rigid structure (2). Said folding axis is configured to contact the backrest (13).

In the embodiment of Figure 2, the rigid structure (2) consists of a single rigid main body (8). The flexible spoiler (6) is created at said front end (4) of the double floor (1) and is arranged tilted upward.

Figure 3 shows an embodiment of the double floor (1) for the trunk of the invention similar to that of Figure 2, but wherein the rigid structure (2) consists of a rigid main body (8) with a rigid spoiler (9) coupled to the front end of the rigid main body (8). The flexible spoiler (6) is arranged at the front end of the rigid spoiler (9). Said configuration ensures contact between the flexible covering (5) and the backrest (13) in any configuration of both the backrest (13) and the double floor (1).

In the embodiment of Figure 3, the flexible spoiler (6) is arranged tilted upward relative to the double floor (1) to which it is mechanically linked. Thus, it may be seen that the flexible spoiler (6) is inclined relative to the rigid spoiler (9). Alternatively, as shown in the embodiment of Figure 2, the flexible spoiler (6) is arranged tilted upward relative to the main surface of the rigid structure (2), forming an obtuse angle relative to said main surface of the rigid structure (2), where the upward inclination points toward the vehicle roof.

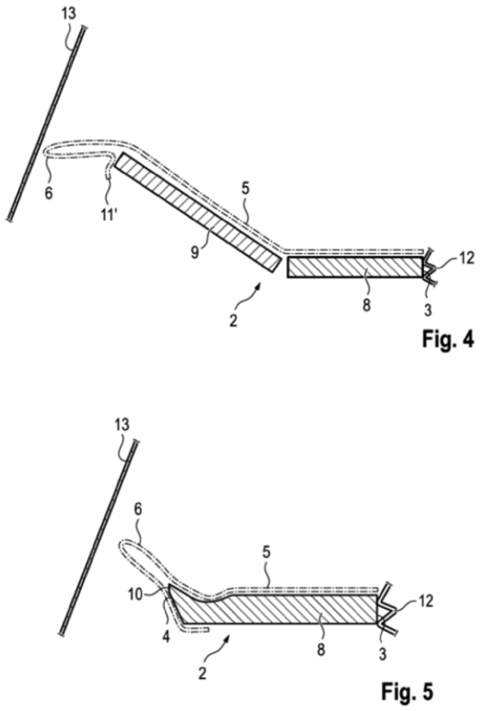

In the embodiment of Figure 4, the flexible spoiler (6) is arranged tilted downward relative to the double floor (1) to which it is mechanically linked. Thus, it may be seen that the flexible spoiler (6) is inclined relative to the rigid spoiler (9), forming an angle greater than 180º relative to the main surface of the rigid structure (2), where the downward inclination points toward the vehicle floor. Alternatively, although not shown, the flexible spoiler (6) is arranged tilted downward relative to the main surface of the rigid structure (2), forming an angle greater than 180º relative to the main surface of the rigid structure (2), where the downward inclination points toward the vehicle floor in said figure.

In the embodiment of the double floor (1) shown in Figure 5, the front end (4) of the rigid structure (2) has an upward-inclined rim (10), arranged so that it contacts the end of the flexible spoiler (6) opposite to the folding of the excess part of the flexible covering (5), as well as configured to orient the flexible spoiler (6) upward as it protrudes from the front end (4) of the rigid structure (2). The inclined rim (10) may have an upward inclination between 25° and 30° relative to the main surface of the rigid structure (2). This inclined rim (10) is created by means of a depression and an inclined wall, whose end creates the front end (4) of the rigid structure (2).

The rigid structure (2) of the double floor (1) for a trunk in the embodiment of Figure 5 consists of a rigid main body (8).

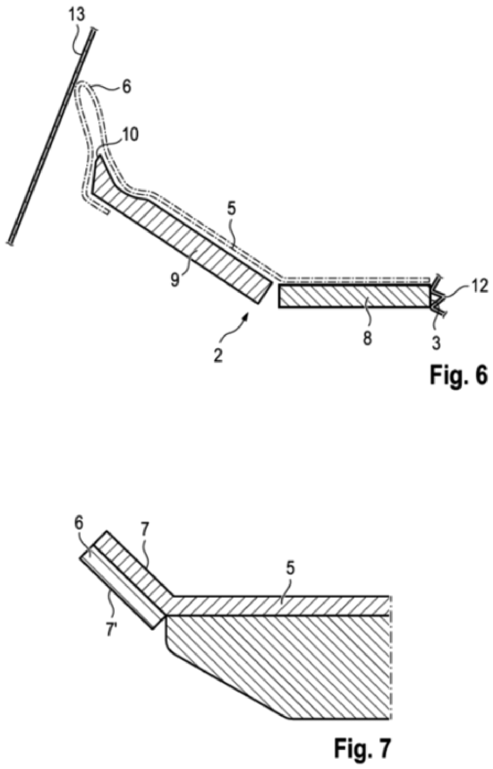

In another embodiment, not shown, of the double floor (1) for a vehicle trunk, the front end (4) of the rigid structure (2) has a downward-inclined rim (10), arranged so that it contacts the end of the flexible spoiler (6) opposite the folding of the excess part of the flexible covering (5), as well as configured to orient the flexible spoiler (6) downward as it protrudes from the front end (4) of the rigid structure (2). This embodiment would be similar to those of Figures 5 and 6, but with the rim inclined (10) downward. The inclined rim (10) may have a downward inclination between 25° and 30° relative to the main surface of the rigid structure (2).

Figure 6 shows an embodiment of the double floor for the trunk of the invention similar to that of Figure 5, but in which the rigid structure (2) consists of a rigid main body (8) with a rigid spoiler (9) coupled to the front end of the rigid main body (8). Said inclined rim (10) is created in the rigid spoiler (9) of the double floor (1).

Figure 7 shows a flexible spoiler (6) of the double floor (1) of the invention formed by a flexible covering (5) folded onto itself with two flaps (7, 7') joined to each other. The figure shows how the flexible spoiler (6) may pivot between different positions. For example, between a position inclined approximately 135° relative to the main surface of the rigid structure (2) of the double floor (shown in solid lines) and a position inclined approximately 90° relative to said main surface of the rigid structure (2) of the double floor (shown in dashed lines). This pivoting movement may occur due to the contact of the rear surface of the backseat (13) during its folding movement.

In the embodiment of Figure 3, the flexible covering (5) comprises a second fold (11) between the flexible spoiler (6) and the front end (4) of the rigid structure (2). This second fold (11) is configured to create an upward inclination in the flexible spoiler (6) protruding from the front end (4) of the rigid structure (2).

In the embodiment of Figure 4, the flexible covering (5) comprises a second fold (11) between the flexible spoiler (6) and the front end (4) of the rigid structure. This second fold (11) is configured to create a downward inclination in the flexible spoiler (6).

In one embodiment of the double floor (1) represented in any of Figures 2 to 7, the two flaps (7, 7') of the flexible covering (5) forming the flexible spoiler (6) are joined to each other by the folding of the excess part of the flexible covering (5) and fixed to the main surface of the rigid structure (2) by their respective opposite ends.

In one embodiment of the double floor (1) for a vehicle trunk, represented in Figure 7, one of the flaps (7) of the flexible covering (5) forming the flexible spoiler (6) is fixed at one of its ends to the main surface of the rigid structure (2), and the other flap (7') is fixed at one of its ends to the front surface of the rigid structure (2).

Figures 5 and 6 show that the flexible spoiler (6) extends up to the front end (4) of the rigid structure (2). The flexible covering (5) then extends downward so that its respective end is not exposed on a visible surface, preventing it from coming loose during handling.

According to one embodiment, the flexible spoiler (6) may extend between both side ends of the rigid structure (2).

The flexible covering (5) may be made of carpet material.

These embodiments of the double floor (1) for a vehicle trunk enable covering the gap between the double floor (1) and the backrest (13) of the rear seat in all positions of these elements.

Comparing the double floor of the invention with that of Figure 1B of the prior art, it may be seen that the total length of the rigid structure (2) plus the flexible spoiler (6) is greater than L1, allowing all possible gaps to be covered.

It is also possible to obtain a vehicle trunk with a double floor (1) according to any of the embodiments of the invention.

The manufacturing method for a double floor (1) for the trunk according to the embodiments of the invention comprises the steps of:
- obtaining a rigid structure (2) defining a main surface delimited by a rear end (3) according to a longitudinal direction, facing a rear tailgate (12) of the trunk, a front end (4) opposite the rear end (3), and two side ends substantially perpendicular to the front end (4) and the rear end (3). For example, the rigid structure may be obtained by thermoforming from a single material sheet, in which the substrate is PP+GF (polypropylene with glass fiber), or honeycomb, in which the structure consists of cardboard in a honeycomb configuration and a PP+GF covering;
- obtaining a flexible covering (5) configured to cover at least the main surface of the rigid structure (2) and to include an excess part relative to said main surface of the rigid structure (2). For example, the flexible covering (5) may be carpet material. One example of production is needle-punched fibers (nonwoven) of PET or PP base or both, and eventually an additional additive such as cotton (CO). According to the manufacturing process, the main types may be mono-layer, bi-layer and tri-laminated;
- placing a flexible covering (5) over at least the main surface of the rigid structure (2), arranging the excess part near the front end (4) of the rigid structure (2);
- folding the excess part of the flexible covering (5) upon itself, such that said excess part of the flexible covering (5) defines a flexible spoiler (6) projecting beyond the front end (4) of the rigid structure (2) along the longitudinal direction, creating two flaps (7, 7'); and
- securing the ends of the flaps (7, 7') opposite the folding to the rigid structure (2), leaving the excess part separated from the main surface of the rigid structure (2) to allow relative movement of the at least two flaps (7, 7') of said excess part relative to the main surface of the rigid structure (2).

Although certain embodiments of the invention have been described and illustrated, it becomes evident that modifications may be made within its scope. Therefore, the invention should not be considered limited to these embodiments, but only to the content of the following claims.

## Claims

1. Double floor (1) for a vehicle trunk comprising:
- a rigid structure (2) defining a main surface delimited by a rear end (3) according to a longitudinal direction, facing a rear tailgate (12) of the trunk, a front end (4) opposite the rear end (3), and two side ends substantially perpendicular to the front end (4) and the rear end (3); and
- a flexible covering (5) over at least the main surface of the rigid structure (2),
**characterized in that** the flexible covering (5) comprises an excess part, such that said excess part of the flexible covering (5) defines a flexible spoiler (6) projecting itself relative to the front end (4) of the rigid structure (2) along the longitudinal direction, said flexible spoiler (6) created by folding the excess part of the flexible covering (5) over itself, forming at least two flaps (7, 7'), said excess part being separated from the main surface of the rigid structure (2), allowing relative movement of the at least two flaps (7, 7') of said excess part relative to the main surface of the rigid structure (2).

2. Double floor (1) for a vehicle trunk according to Claim 1, wherein the folding axis of the excess part of the flexible covering (5) is arranged substantially parallel to the front end (4) of the rigid structure (2).

3. Double floor (1) for a vehicle trunk according to any of the preceding claims, wherein the folding axis of the excess part of the flexible covering (5) is arranged spaced apart from the rigid structure (2), and the opposite ends of the at least two flaps (7, 7') are fixed to the rigid structure (2), such that said at least two flaps (7, 7') may be pivoted relative to said rigid structure (2).

4. Double floor (1) for a vehicle trunk according to any of the preceding claims, wherein the rigid structure (2) consists of a rigid main body (8).

5. Double floor (1) for a vehicle trunk according to any of Claims 1 to 3, wherein the rigid structure (2) consists of a rigid main body (8) and a rigid spoiler (9) coupled to the front end of the rigid main body (8), the flexible spoiler (6) being arranged at the front end of the rigid spoiler (9).

6. Double floor (1) for a vehicle trunk according to any of the preceding claims, wherein the flexible spoiler (6) is arranged inclined upward relative to the main surface of the rigid structure (2), forming an obtuse angle relative to said main surface of the rigid structure (2), where the upward inclination points toward the vehicle roof.

7. Double floor for a vehicle trunk according to any of Claims 1 to 5, wherein the flexible spoiler (6) is inclined downward relative to the main surface of the rigid structure (2), forming an angle greater than 180º relative to the main surface of the rigid structure (2), where the downward inclination points toward the vehicle floor.

8. Double floor (1) for a vehicle trunk according to any of Claims 1 to 6, wherein the front end (4) of the rigid structure (2) has an upward-inclined rim (10), said inclined rim (10) being arranged in contact with the end of the flexible spoiler (6) opposite the folding of the excess part of the flexible covering (5), as well as configured to orient the flexible spoiler (6) upward as it protrudes from the front end (4) of the rigid structure (2).

9. Double floor (1) for a vehicle trunk according to any of Claims 1 to 5 or 7, wherein the front end (4) of the rigid structure (2) has a downward-inclined rim, said inclined rim (10) being arranged in contact with the end of the flexible spoiler (6) opposite the folding of the excess part of the flexible covering (5), as well as configured to orient the flexible spoiler (6) downward as it protrudes from the front end (4) of the rigid structure (2).

10. Double floor (1) for a vehicle trunk according to any of Claims 1 to 6, wherein the flexible covering (5) comprises a second fold (11) between the flexible spoiler (6) and the front end (4) of the rigid structure (2), said second fold (11) being configured to create an upward inclination in the flexible spoiler (6).

11. Double floor (1) for a vehicle trunk according to any of Claims 1 to 5 or 7, wherein the flexible covering (5) comprises a second fold (11) between the flexible spoiler (6) and the front end (4) of the rigid structure, said second fold (11) being configured to create a downward inclination in the flexible spoiler (6).

12. Double floor (1) for a vehicle trunk according to any of the preceding claims, wherein the two flaps (7, 7') of the flexible covering (5) forming the flexible spoiler (6) are linked together by the folding of the excess part of the flexible covering (5) and fixed at their respective opposite ends to the main surface of the rigid structure (2).

13. Double floor (1) for a vehicle trunk according to any of Claims 1 to 11, wherein one of the flaps (7) of the flexible covering (5) forming the flexible spoiler (6) is fixed at one of its ends to the main surface of the rigid structure (2), and the other flap (7') is fixed at one of its ends to the front surface of the rigid structure (2).

14. Vehicle trunk, **characterized in that** it comprises a double floor (1) according to any of Claims 1 to 13.

15. Manufacturing method for a double floor (1) of a trunk, **characterized in that** it comprises the steps of:
- obtaining a rigid structure (2) defining a main surface delimited by a rear end (3) according to a longitudinal direction, facing a rear tailgate (12) of the trunk, a front end (4) opposite the rear end (3), and two side ends substantially perpendicular to the front end (4) and the rear end (3);
- obtaining a flexible covering (5) configured to cover at least the main surface of the rigid structure (2) and to include an excess part relative to said main surface of the rigid structure (2);
- placing a flexible covering (5) over at least the main surface of the rigid structure (2), arranging the excess part near the front end (4) of the rigid structure (2);
- folding the excess part of the flexible covering (5) upon itself, such that said excess part of the flexible covering (5) defines a flexible spoiler (6) projecting beyond the front end (4) of the rigid structure (2) along the longitudinal direction, creating two flaps (7, 7'); and
- securing the ends of the flaps (7, 7') opposite the folding to the rigid structure (2), leaving the excess part separated from the main surface of the rigid structure (2) to allow relative movement of the at least two flaps (7, 7') of said excess part relative to the main surface of the rigid structure (2).
